# EUROPEAN PATENT APPLICATION

(11) **EP 2 515 397 A1**
(43) Date of publication of application: **24.10.2012**
(21) Application number: 11162826.9
(22) Date of filing: 18.04.2011
(51) Int. Cl.: H02B 1/30, H02G 3/08

(54) **Fastening and separating assembly for a switchgear panel**

(71) Applicant: ABB Technology AG, 8050 Zürich (CH)
(72) Inventor: Carelli, Vittorio, 26900, Lodi (IT); Rambaldini, Simone, 20037, Paderno Dugnano (MI) (IT)
(74) Representative: De Santis, Giovanni

(57) **Abstract**

A fastening and separating assembly (1) for a cabinet housing of a switchgear panel, comprising first baffle means (15) and second baffle means (16) interposable between a first zone (5) and a second zone (6) of the cabinet housing; the first baffle means and the second baffle means are operatively connected to each other so as to mutually cooperate for clamping there between a separating element (10) which is intended to separate the first zone from the second zone and through which one or more electrical cables, extending from the first zone to the second zone are threaded. The first baffle means and the second baffle means are configured to be connected to the cabinet housing so as to firmly keep in a set position, and prevent any displacement of the separating element and the one or more electrical cables.

## Description

The present disclosure relates to a fastening and separating assembly for firmly keeping in a correct position one or more cables within a cabinet housing of a switchgear panel. The fastening and separating assembly according to the present disclosure is configured for safely and reliably separating, within the cabinet housing, a first compartment from a second compartment which are traversed by such cables. The fastening and separating assembly is particularly suitable to be used in the Medium or High Voltage field, i.e. for applications in the range from 1 kV up to some tens of kV.

A switchgear panel is known comprising a cabinet housing in which various apparatuses and equipments can be mounted. In the cabinet housing an upper compartment is defined in which a circuit breaker is housed. A lower compartment of the cabinet housing is also defined which is placed below the upper compartment. Main cables, entering the upper compartment, feed the circuit breaker with power from the primary power distribution. There are provided secondary cables, associated to a secondary power distribution, which lead off from the circuit breaker for conveying the power from the latter to a load, for example an electrical motor, to be fed. The secondary cables, connected to the circuit breaker, project downwards by running along the lower compartment. For safety reasons and for protecting the electrical equipments housed in the upper compartment from any undesired intrusion, e.g. insects, animals or other bodies which may dangerously accede from the lower compartment to the circuit breaker, a sheet-shaped rubber cover is interposed between the upper compartment and the lower compartment for separating one from the other. On the rubber cover suitable holes are obtained enabling passage of the secondary cables there through. In particular, the secondary cables are threaded through the rubber cover and the latter rests on horizontal frame bars internally provided in the cabinet housing, the rubber cover so defining a substantially horizontal surface separating the upper compartment from the lower compartment. The rubber cover is freely laid on the horizontal frame bars and is kept in a stationary position by the secondary cables which are rather stiff and not very easy to move. The rubber cover is therefore only constrained to the secondary cables. Although the rubber cover somehow isolates the upper compartment from the lower compartment, it is not able to ensure a steady separation of the two compartments in a reliable and lasting way. In fact, a correct position of the rubber cover is only ensured if the secondary cables are not subject to external actions which may cause a displacement thereof. However, peripheral zones of the rubber cover are left free to move and thus intrusion of undesired items into the upper compartment is not effectively prevented.

Furthermore, the rubber cover does not contribute itself to prevent any undesired displacement of the secondary cables.

It would be desirable to overcome the prior art drawbacks and to improve the known arrangements for separating the upper compartment from the lower arrangement within a cabinet housing of a switchgear panel by providing a technical solution which is at same time cheap, safe, reliable structurally not complicated and easy to be mounted to new or already existing cabinet housings.

This desire is fulfilled by a fastening and separating assembly for a cabinet housing of a switchgear panel, characterized in that it comprises first baffle means and second baffle means interposable between a first zone and a second zone of said cabinet housing, said first baffle means and said second baffle means being operatively connected to each other so as to mutually cooperate for clamping there between a separating element which is intended to separate said first zone from said second zone and through which one or more electrical cables, extending from said first zone to said second zone, are threaded, said first baffle means and said second baffle means being configured to be connected to said cabinet housing so as to firmly keep in a set position, and prevent any displacement of said separating element and said one or more electrical cables.

The present disclosure also encompasses a cabinet housing for a switchgear panel, and a switchgear panel as well, each comprising a fastening and separating assembly as defined in the appended claims and in the following description.

Detailed characteristics and advantages will become apparent from the description of some preferred but not exclusive embodiments of a fastening and separating assembly according to the present disclosure, illustrated only by way of non-limitative examples with the accompanying drawings, wherein:
figure 1 is a schematic perspective view of a switchgear panel comprising a fastening and separating assembly according to the present disclosure;
figure 2 shows the fastening and separating assembly according to the present disclosure; figure 3 is a view of part of the switchgear panel in figure 1;
figure 4 is a longitudinal section view of a portion of the switchgear panel, in which the fastening and separating assembly is shown;
figure 5 is a cross-section view of the fastening and separating assembly;

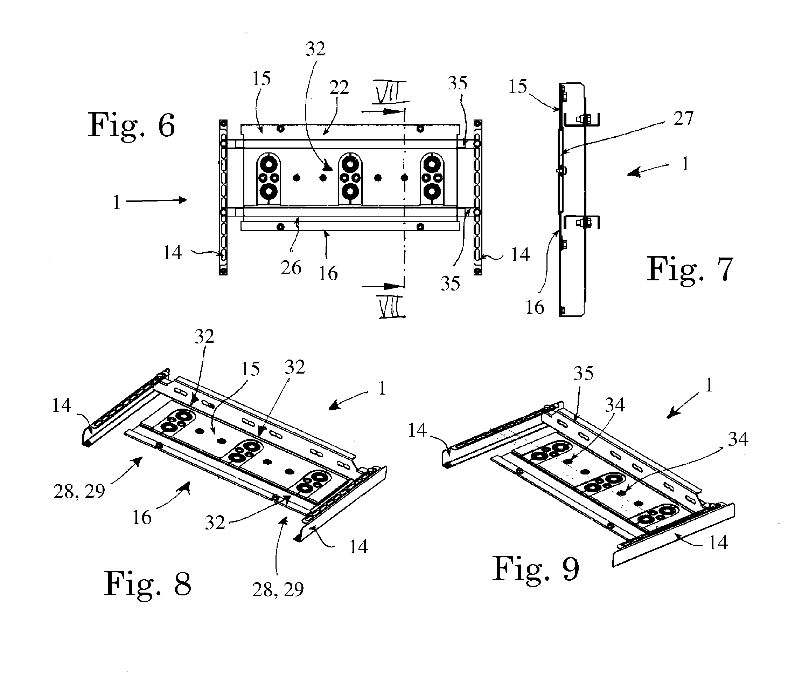

figure 6 is a top view of the fastening and separating assembly of the present disclosure;
figure 7 is a cross section of the fastening and separating assembly taken along the plane VII-VII in figure 6;
figures 8 and 9 are perspective views of the fastening and separating assembly according to the present disclosure;
figure 10 is a perspective view of a first component of the fastening and separating assembly according to the present disclosure;
figure 11 is a front view of a further component of the fastening and separating assembly according to the disclosure, which has the same shape of the first component of figure 10;
figure 12 is a side view of the components in figures 10-11;
figure 13 shows an enlarged detail of figure 12;

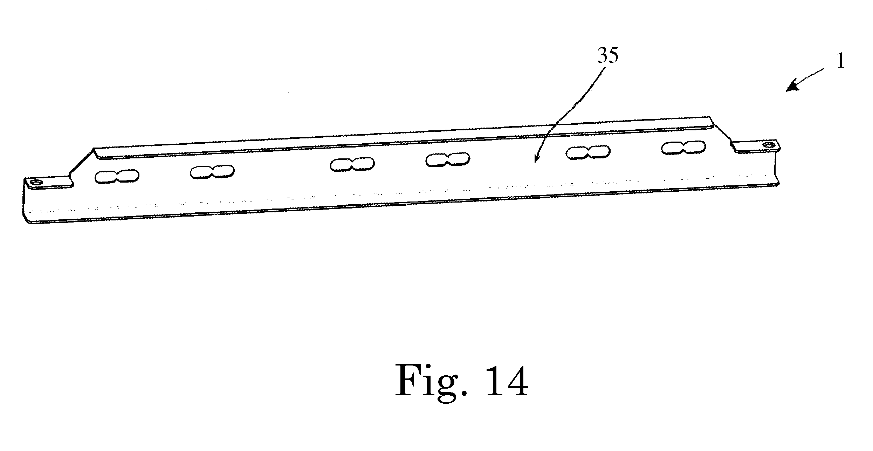

figure 14 is a perspective view of a further component of the fastening and separating assembly of the present disclosure.

It should be noted that in the detailed description that follows, identical or similar components may have the same reference numerals, regardless of whether they are shown in different embodiments of the present invention; it should also be noted that in order to clearly and concisely disclose the present invention, the drawings may not necessarily be to scale and certain features of the invention may be shown in somewhat schematic form.

With reference to the attached figures, a fastening and separating assembly 1 is shown which can be used in the Medium or High Voltage field, i.e. for applications with nominal voltages from 1kV up to some tens of kV.

The fastening and separating assembly 1 according to the disclosure can be arranged in a cabinet housing 2 of a switchgear panel 3 - also indicated in the art with the equivalent terms of electric switchboard, or simply switchgear or electric panel - for firmly keeping in a correct position electrical cables, in particular cables of a secondary power distribution. The fastening and separating assembly 1 effectively and reliably separates two adjacent compartments, e.g. a lower compartment 5 from an upper compartment 6 of the cabinet housing 2 which can contain various electrical apparatuses.

For example, in the exemplary embodiment illustrated, , the upper compartment 6 houses a circuit breaker 7 which can be connected to three main or primary cables 8 of a primary power distribution coming from an upper zone. The circuit breaker 7 is connectable to secondary cables 9, associated to a secondary power distribution, which lead off from the circuit breaker 7 for conveying the power to a load, for example an electrical motor to be fed. The secondary cables 9 project downwards by running along the lower compartment 5.

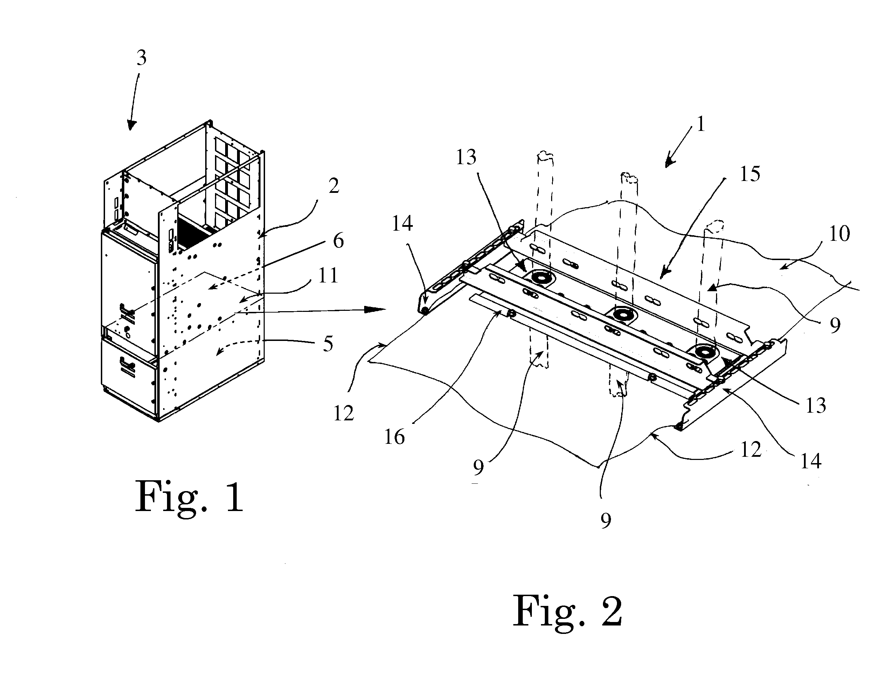

An insulating or separating element, e.g. a rubber cover schematically shown in figure 2 by the reference number 10, or any other equivalent isolating element, e.g. in the form of a sheet, is placed within the cabinet housing 2 for separating the upper compartment 6 from the lower compartment 5, so as to protect the electrical equipments, in particular the circuit breaker 7 from undesired intrusions, e.g. insects, animals or any other item which, coming from the lower compartment 5, may dangerously accede to the upper compartment 6. The fastening and separating assembly 1 of the present disclosure is configured for blocking the rubber cover 10 in a set position and preventing any undesired displacement thereof.

The rubber cover 10 is arranged within the cabinet housing 2 so as to define a substantially horizontal plane 11 delimiting the upper compartment 6 from the lower compartment 5.

On the rubber cover 10 there are obtained suitable through openings, for example in the form of through cuts 13 through which the secondary cables 9 are threaded and can extend from the lower compartment 5 to the upper compartment 6.

The fastening and separating assembly 1 comprises a first baffle element 15 and a second baffle element 16 which can be mutually coupled, i.e. fixable to one other, so as to clamp the rubber cover 10 there between.

In the exemplary embodiment illustrated, the first baffle element 15 and the second baffle element 16 are in the form of plate elements, and can be obtained from metallic sheet material.

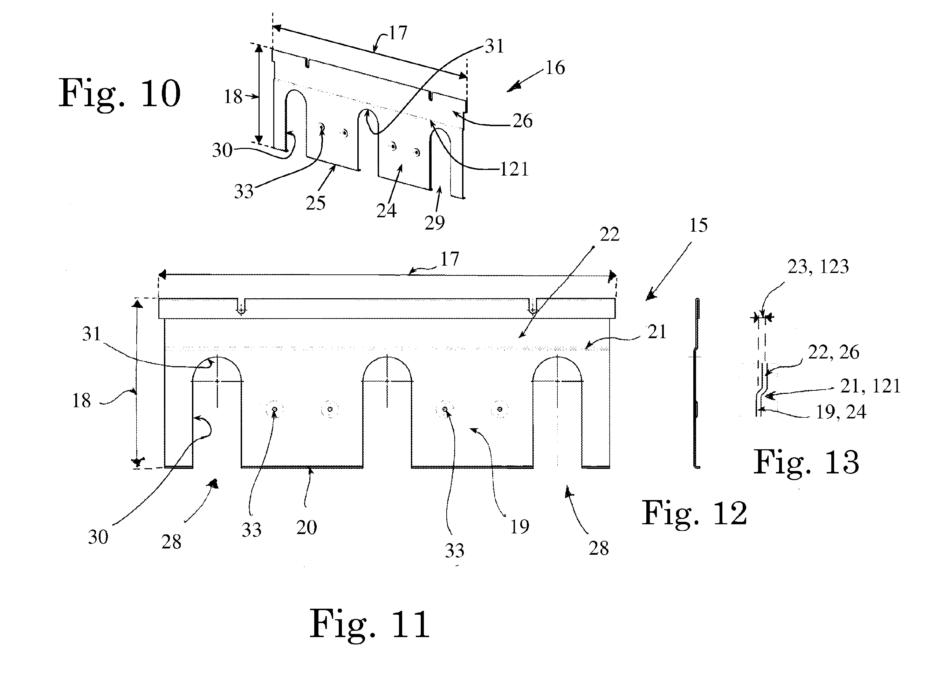

In particular, the first and second baffle elements 15 and 16 have an equal shape; a perspective view of the second baffle element 16 (which can be considered also as the perspective view of the first baffle element 15) is illustrated in figure 10, while figure 11 illustrates a front view of the first baffle element 15 (which can be considered also as a front view of the second baffle element 16).

Each of the first and second baffle elements 15 and 16 have a longitudinal dimension 17, which may be equal or less than an internal width of the cabinet housing 2, and a transverse dimension 18.

In the exemplary embodiment illustrated, the first baffle element 15 comprises a first operative portion 19 which extend for the whole longitudinal dimension 17 and for part of the transverse dimension 18. The first operative portion 19 extends from a first edge 20 of the first baffle element 15 to a fillet zone 21 which connects the first operative portion 19 to a first band zone 22. The first operative portion 19 and the first band zone 22 lye in respective planes which are mutually spaced by a distance 23, as shown in figure 13.

The second baffle element 16 is shaped analogously to the first baffle element 15, and comprises a second operative portion 24 extending from a second edge 25 of the second baffle element 16 to a further fillet zone 121, where the further fillet zone 121 connects the second operative portion 24 to a second band zone 26. The second operative portion 24 and the second band zone 22 lye in respective planes which are mutually spaced by a distance 123 as in the first baffle element 15.

The first operative portion 19 and the second operative portion 24 are configured for overlapping to one other and clamping between them the rubber cover 10.

When the first baffle element 15 and the second baffle element 16 are assembled together, i.e. are operatively coupled to each other, a gap 27 results defined between the first operative portion 19 and the second operative portion 24 in which part of the rubber cover 10 is received so as to be clamped.

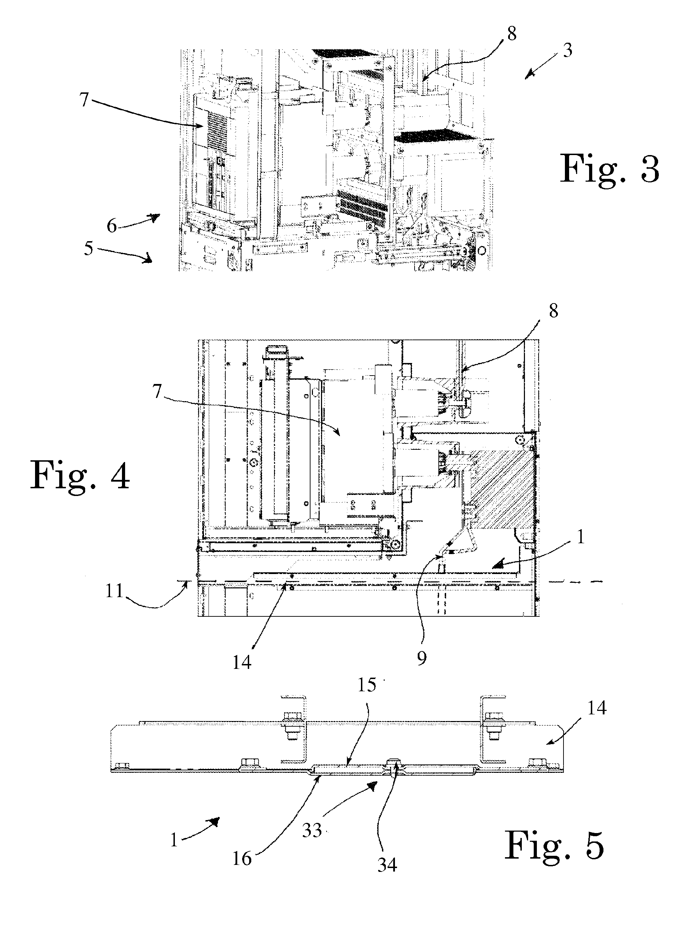

Suitable coupling openings 33 are obtained on the first operative portion 19 and on the second operative portion 24, which receive respective securing elements 34, such as screws, as better shown in figure 5.

On the first baffle element 15 and on the second baffle element 16 first seat zones 28 and second seat zone 29 respectively are obtained which have the function of housing the secondary cables 9, as it will be better described in the following. The first seat zones 28 extend from the first edge 20 to almost the fillet zone 21 so as to define first half-slots 28 comprising a straight seat portion 30 and a circular delimiting portion 31.

The second seat zones of the second baffle element 16 comprise second-half slots 29 which are shaped analogously to the first-half slots 28, i.e. they comprise a straight seat portion 30 and a circular delimiting portion 31.

When assembling, the first baffle element 15 and the second baffle element 16 are positioned overlapping one above the other and opposing to each other, namely the first baffle element 15 and the second baffle element 16, are mutually coupled so that the first band zone 22 results arranged at an opposite side with respect to the second band zone 26. In this way, the first half-slots 28 and the second-half slots 29 face to each other and mutually cooperate to define passage openings 32, in particular three passage openings 32 each for a respective secondary cable 9.

The three passage openings 32 are uniformly spaced apart from one other along the first operative portion 19 and along the second operative portion 24.

The passage openings 32 are so shaped as to encircle the secondary cables 9 which thus are furthermore prevented from undesired displacements.

Peripheral edges 12 of the rubber cover 10 can rest on the horizontal frame bars 14, internally provided in the cabinet housing 2, or can be peripherally fixed to such horizontal frame bars 14 and thus to the cabinet housing 2. In this way, in addition to the effective fastening action provided by the fastening and assembly 1, the rubber cover 10 results furthermore stable and secured in the correct position. In particular, possible displacements of the peripheral zones of the rubber cover 10 are therefore hindered.

In the exemplary embodiment illustrated, the fastening and separating assembly 1 further comprises a pair of crosspiece members 35 which are arranged parallel to one other and extend parallel to the longitudinal dimension 17 of the first and second plate elements 15, 16. The crosspiece members 35 are configured for example for being fixed to horizontal frame bars 14 internally provided in the cabinet housing 2. The first and second plate elements 15, 16 can be connected to the crosspieces members 35 so as to result firmly constrained to the cabinet housing 2.

Furthermore, owing to the fastening and separating assembly 1 a stable position of the rubber cover 10, and therefore of the secondary cables 9 is ensured, even if the latter are subject to external forces which tend to move them.

Furthermore, owing to the fastening and separating assembly 1, a steady separation of the lower and upper compartments 5, 6 is ensured in a reliable and durable way, and therefore intrusion of undesired items into the upper compartment 5 is effectively prevented, thus avoiding potentially serious damages to the circuit breaker 7.

The fastening and separating assembly 1 according to the disclosure above described fully achieves the intended aims of providing a fastening and separating assembly 1 which is structurally not complicated, easy to be mounted on a switchgear apparatus, cheap and reliable to efficiently prevent undesired damages to the electrical equipments contained in the cabinet housing 2.

The dimensions, shape, and structural configuration of the fastening and separating assembly 1 may be changed and adapted according to the specific requirements and to the particular geometry of the cabinet housing 2.

The fastening and separating assembly 1 is susceptible of modifications or variations all within the scope of the inventive concept, as defined by the appended claims; for example, the first baffle 15 and the second baffle 16 could be shaped differently from each other or connected in a different way to each other; the cross members 35 may be differently shaped or connected differently to the frame of the cabinet, et cetera.

## Claims

1. Fastening and separating assembly (1) for a cabinet housing (2) of a switchgear panel (3), **characterized in that** it comprises first baffle means (15) and second baffle means (16) interposable between a first zone (5) and a second zone (6) of said cabinet housing (2), said first baffle means (15) and said second baffle means (16) being operatively connected to each other so as to mutually cooperate for clamping there between a separating element (10) which is intended to separate said first zone (5) from said second zone (6) and through which one or more electrical cables (9), extending from said first zone (5) to said second zone (6), are threaded, said first baffle means (15) and said second baffle means (16) being configured to be connected to said cabinet housing (2) so as to firmly keep in a set position, and prevent any displacement of said separating element (10) and said one or more electrical cables (9).

2. Fastening and separating assembly (1) according to claim 1, wherein said first baffle means (15) and said second baffle means (16) are mutually mechanically coupable, and have first seat means (28) and second seat means (29) respectively which reciprocally cooperate for housing part of said one or more cables (9).

3. Fastening and separating assembly (1) according to claim 1 or 2, wherein said first baffle means (15) and said second baffle means (16) comprise a first plate element (15) and a second plate element (16) respectively, which are suitable for being arranged so as to define a separation plane (11) delimiting said first zone (5) from said second zone (6).

4. Fastening and separating assembly (1) according to claim 3, wherein said first plate element (15) and said second plate element (16) comprise a first operative portion (19) and a second operative portion (24) respectively which are configured for mutually overlapping so as to clamp between them said separating element (10).

5. Fastening and separating assembly (1) according to claim 4, wherein said first plate element (15) and said second plate element (16) comprise a first band portion (22) and a second band portion (26) respectively which lye on a plane which is parallel and spaced apart from further planes on which said first operative portion (19) and said second operative portion (24) lye, a gap (27) for housing at least part of said separating element (10) being defined between said first operative portion (19) and said second operative portion (24).

6. Fastening and separating assembly (1) according to claim 4 or 5, wherein coupling openings (33) are obtained on said first operative portion (19) and second operative portion (24) for fastening, through suitable fixing means (34), said first plate element (15) to said second plate element (16).

7. Fastening and separating assembly (1) according to one or more of the preceding claims, wherein said first seat means (28) comprises first half-slots (28) extending from an edge (20) of said first baffle element (15) for at least part of said first operative portion (19) and said second seat means (29) comprises second half-slots (29) extending from a further edge (25) of said second baffle element (16) for at least part of said second operative portion (24).

8. Fastening and separating assembly (1) according to claim 7, wherein said first half-slots (28) and said second half-slots (29) mutually cooperate so as to define passage openings (32) each encircling a respective cable (9).

9. Fastening and separating assembly (1) according to claim 8, wherein said first half-slots (28) and said second half-slots (29) mutually cooperate so as to define three passage openings (32) spaced apart from one other along said first operative portion (19) and said second operative portion (24) .

10. Fastening and separating assembly (1) according to claim 9, wherein said passage openings (32) are uniformly spaced apart from one other.

11. Fastening and separating assembly (1) according to one or more of the preceding claims, further comprising a pair of crosspiece members (35) extending parallel to a longitudinal dimension (17) of said first baffle means (15) and of said second baffle means (16), said first baffle means (15) and said second baffle means (16) being fixable to side walls of said cabinet housing (2) through said pair of crosspiece members (35).

12. Fastening and separating assembly (1) according to according to one or more of the preceding claims, wherein said first baffle means (15) and said second baffle means (16) are obtained from a metal sheet material and are substantially identical to each other.

13. Cabinet housing (2) for a switchgear panel (3), **characterized in that** it comprises a fastening and separating assembly (1) according to one or more of the preceding claims.

14. A switchgear panel (3), **characterized in that** it comprises a fastening and separating assembly (1) according to one or more of the claims 1-12.
